# EUROPÄISCHE PATENTSCHRIFT

(11) **EP 1 135 637 B1**
(45) Veröffentlichungstag und Bekanntmachung des Hinweises auf die Patenterteilung: **14.08.2002**
(21) Anmeldenummer: 99957329.8
(22) Anmeldetag: 01.12.1999
(51) Int. Cl.: F16H 61/06, B60K 41/06

(54) **VERFAHREN ZUM STEUERN EINES AUTOMATGETRIEBES**
METHOD FOR CONTROLLING AN AUTOMATIC TRANSMISSION
PROCEDE POUR COMMANDER UNE TRANSMISSION AUTOMATIQUE

(30) Priorität: 07.12.1998 DE 19856326
(43) Veröffentlichungstag der Anmeldung: 26.09.2001
(73) Patentinhaber: ZF FRIEDRICHSHAFEN Aktiengesellschaft, 88038 Friedrichshafen (DE)
(72) Erfinder: DREIBHOLZ, Ralf, D-88074 Meckenbeuren (DE); DOMIAN, Hans-Jörg, D-88090 Immenstaad (DE)
(86) Internationale Anmeldenummer: EP9909338
(87) Internationale Veröffentlichungsnummer: WO0034692

(56) Entgegenhaltungen:
- EP-A- 0 349 994
- EP-A- 0 849 110
- DE-A- 4 209 091
- DE-A- 4 424 456
- DE-A- 19 804 630
- US-A- 4 890 515
- US-A- 5 033 328
- SCHWAB M ET AL: "DER MOTOREINGRIFF - EIN NEUES ELEMENT DER ELEKTRONISCHEN GETRIEBESTEUERUNG" , TECHNISCHE BERICHTE - BOSCH,DE,ROBERT BOSCH, STUTTGART, VOL. 7, NR. 4, PAGE(S) 166-174 XP000869573 ISSN: 0006-789X in der Anmeldung erwähnt das ganze Dokument

## Beschreibung

Die Erfindung betrifft ein Verfahren zum Steuern eines von einer Kraftmaschine angetriebenen Automatgetriebes, bei dem eine Schaltung von einem ersten in ein zweites Übersetzungsverhältnis als eine Zug-Hochschaltung, bzw. eine Schubrückschaltung oder als eine Zugrückschaltung, bzw. eine Schubhochschaltung erfolgt. Dabei wird eine erste Kupplung geöffnet und eine zweite geschlossen und ein elektronisches Getriebe-Steuergerät steuert über elektromagnetische Ventile den Druckverlauf der ersten und der zweiten Kupplung während des Schaltvorgangs. Dieser besteht im einzelnen aus einer Schnellfüll-, einer Füllausgleichs-, einer Lastübernahme-, einer Gradient-Einstell-, einer Gleit-, einer Gradient-Abbau- und einer Schließphase.

Ein derartiges Verfahren ist aus der Offenlegung DE 44 24 456 A1 der Anmelderin bereits bekannt, die hiermit durch ausdrückliche Bezugnahme in den Offenbarungsgehalt der vorliegenden Patentanmeldung aufgenommen wird. In dieser Schrift wird insbesondere die Anwendung dieses Verfahrens bei einem Gruppengetriebe vorgeschlagen.

Aus dem Stand der Technik ("Der Motoreingriff" - ein neues Element der elektronischen Getriebesteuerung von Manfred Schwab und Alfred Müller, Bosch, Technische Berichte 7, 1983, Seiten 166 bis 174) ist es allgemein bekannt, einen Motoreingriff während eines Schaltvorgangs durchzuführen, wobei durch einen zeitlich exakt gesteuerten Verlauf des Motormoments während der Schaltvorgänge eines automatischen Getriebes die Getriebe-Steuerung im Hinblick auf Schaltkomfort, Lebensdauer der Reibelemente und auf die übertragbare Leistung des Getriebes optimiert werden kann. Unter einem Motoreingriff sind dabei alle Maßnahmen zu verstehen, die es gestatten, während eines Schaltvorgangs im Getriebe das durch den Verbrennungsvorgang erzeugte Motormoment gezielt zu beeinflussen, insbesondere zu reduzieren. Aufgrund der strengen Anforderung des Gesetzgebers an die Reaktionszeit und den zeitlichen Ablauf der Steuerung bei einer Gesamtdauer des Eingriffs von nur etwa 500 ms ist eine präzise, zeitliche Abstimmung der Schaltvorgänge erforderlich. Ein Motoreingriff läßt sich sowohl bei Hochschaltungen als auch bei Rückschaltungen anwenden. Primäres Ziel des Motoreingriffs bei Hochschaltungen ist es, die während des Schaltvorgangs in den Reibelementen erzeugte Verlustenergie zu verringern, indem während des Synchronisationsvorgangs das Motormoment reduziert wird, ohne die Zugkraft zu unterbrechen. Der hierdurch gewonnene Spielraum kann genutzt werden zur Erhöhung der Lebensdauer der Reibpartner durch Schleifzeitverkürzung.

Aus der DE 42 09 091 A1 ist ferner ein Verfahren zur Reduzierung des Motormoments bei einem Gangwechsel in einem Kraftfahrzeug bekannt. Dabei wird das Drehenergiemoment, das durch zu verzögernde oder zu beschleunigende, rotierende Massen bei einer gangwechselbedingten Änderung der Motordrehwinkelgeschwindigkeit entsteht, berechnet und das Motormoment wird beim Einkuppeln des neuen Getriebegangs um den Betrag dieses Drehenergiemoments reduziert.

Verfahren der oben genannten Art unterliegen einer ständigen Weiterentwicklung im Hinblick auf einen optimalen Einsatz des Motoreingriffs bei möglichst geringer Belastung der Schaltelemente, einem optimalen Momentenverlauf unter Berücksichtigung der Vorgaben der Motoren-Hersteller, insbesondere bezüglich der Grenzen des maximal möglichen Motoreingriffs in bezug auf Gemisch- bzw. Abgasbedingungen, sowie einer Nutzung möglicher Vorteile in der Schaltqualität aufgrund der Motorbeeinflussung. Die gattungsbildende DE 19804630 A zeigt eine Steuerung für eine automatisches Getriebe, die an die Motorsteuerung einen Motoreingriffsfaktor abgibt, der von dern Druckaufbare abhängt.

Aufgabe der vorliegenden Erfindung ist es, einen optimierten Einsatz des Motoreingriffs anzugeben, welcher eine Verbesserung der Schaltqualität durch einen Motoreingrif erzielt, insbesondere durch einen Angleich des Abtriebsmoments während der Rutschphase an das Abtriebsmoment am Schaltungsende.

Diese Aufgabe wird erfindungsgemäß gelöst, indem bei einem oben angegebenen gattungsgemäßen Verfahren innerhalb der Lastübernahme - , der Gradienten-Einstell-, der Gleit-, der Gradient-Abbau- und der Schließphasen ein Motoreingriff durch eine Reduzierung des Motormoments erfolgt, wobei ein Motormoment und/oder eine dieses bestimmende Kenngröße von dem Getriebe-Steuergerät an ein Motor-Steuergerät der Kraftmaschine übertragen wird. Dadurch wird vorteilhafterweise erreicht, daß Überhöhungen der Einbrüche des Abtriebsmoments im Teillastbereich bei allen Schaltungsarten vermieden werden. Ferner wird das Ansprechverhalten, bzw. die Fahrdynamik des Getriebes insbesondere bei Zugrückschaltungen im Teillastbereich verbesert sowie die Schaltelementbelastung verringert und die Schaltqualität bei Zughochschaltungen verbessert.

In einer Weiterbildung der Erfindung wird vorgeschlagen, daß man den Beginn des Motoreingriffs zur Synchronisierung mit dem Schaltdruckaufbau in den Phasen GE und GL über eine Zeitstufe verzögert, wenn die Reaktion des Motors auf den Motoreingriff schneller ist als die Reaktion des Getriebes auf Druckvorgaben. Dadurch wird vorteilhafterweise erreicht, daß das Abtriebsmoment nicht unnötigerweise reduziert wird.

In Umkehrung der vorgenannten Merkmale wird vorgeschlagen, daß man den Beginn des Schaltdruckaufbaus zur Synchronisierung mit dem Motoreingriff in den Phasen GE und GL über eine Zeitstufe verzögert, wenn die Reaktion des Motors auf den Motoreingriff langsamer ist als die Reaktion des Getriebes auf Druckvorgaben. Dadurch wird vorteilhafterweise erreicht, daß unnötige Reibbelastungen an Schaltelementen vermieden werden.

In einer Weiterbildung der Erfindung wird das dynamische Motormoment M_DYN während der Gradient-Einstellphase GE von 0 auf 100 % gesteigert, in der Gleitphase GL verbleibt es bei 100 % und in der sich anschließenden Gradient-Abbauphase GA wird das dynamische Motormoment M_DYN von 100 % auf 0 wieder reduziert.

Beim Vorhandensein anderer momentbeeinflussender Aggregate außer der Kraftmaschine, wie z. B. einem Elektromotor, einer Lichtmaschine, einem Lüfter, einem Klimakompressor, einer Zusatzbremse o. ä., wird der Motoreingriff auf diese Aggregate verteilt, so daß dadurch vorteilhafterweise der begrenzte Momentbereich der Brennkraftmaschine erweitert wird.

Der Begriff des Motormoments erweitert sich in diesem Fall auf die Summe der Momente aller am Getriebeeingang angreifenden Aggregate.

Weitere Ziele, Merkmale, Vorteile und Anwendungsmöglichkeiten der Erfindung ergeben sich aus der nachfolgenden Beschreibung der Ausführungsbeispiele, welche in den Figuren näher dargestellt sind. Dabei bilden alle beschriebenen und/oder bildlich dargestellten Merkmale für sich oder in beliebiger sinnvoller Kombination den Gegenstand der Erfindung, unabhängig von ihrer Zusammenfassung in ihren Ansprüchen und deren Rückbeziehung.
Es zeigen:
- Fig. 1+2: den Sollverlauf des Abtriebsmoments bei Zughoch- und Schubrück-, bzw. Zugrück- und Schubhochschaltungen für Voll- und Leergasstellung bei konstantem dynamischen Moment M_DYN,
- Fig. 3: den Sollverlauf der Differenzdrehzahl während des Schaltverlaufs nach Fig. 1 und 2,
- Fig. 4+5: den Sollverlauf des Abtriebsmoments ähnlich Fig. 1 und 2, jedoch für Teilgasstellung mit Kompensation des dynamischen Moments M_DYN,
- Fig. 6+7: den Sollverlauf des Abtriebsmoments ähnlich Fig. 1 und 2, jedoch für Teilgasstellung unter der Bedingung M_AB(GL) = M_AB(NG).

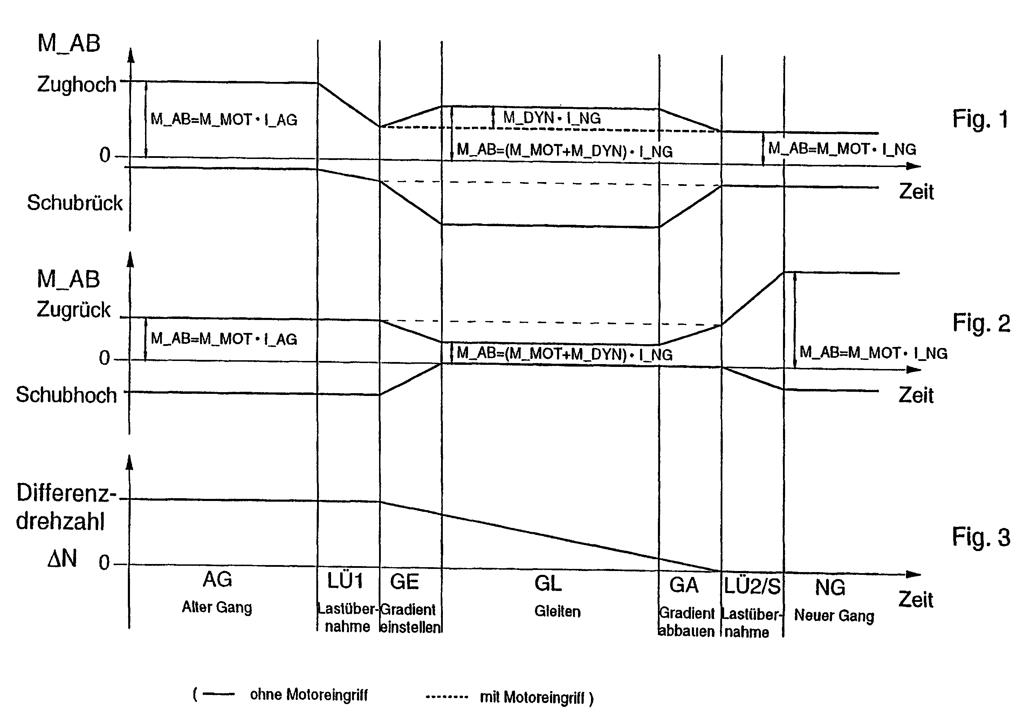

In den nachfolgenden Fig. 1, 2 und 4 bis 7 ist jeweils der Sollverlauf des Abtriebsmoments M_AB über der Zeit dargestellt, wobei einerseits die Zughoch- und die Schubrückschaltung (Fig. 1, 4, 6) sowie andererseits die Zugrückund die Schubhochschaltung (Fig. 2, 5, 7) in getrennten Figuren dargestellt sind. Die Zeitspannen in allen Figuren sind im wesentlichen mit den selben Abkürzungen versehen; dies sind AG für die Phase des Alten Gangs, LÜ für die Lastübernahmephase, wobei LÜ1 vor der Gradienteinstellphase und LÜ2 nach der Gradientabbauphase angeordnet sind, GE für die Gradienteinstellphase, GL für die Gleitphase, GA für die Gradientabbauphase und S für die Schließphase sowie NG für die Phase des Neuen Gangs. Weiterhin ist der Sollverlauf des Abtriebsmoments M_AB ohne Motoreingriff mit einer durchgezogenen und der Sollverlauf des Abtriebsmoment M_AB mit Motoreingriff mit einer gestrichelt dargestellten Linie aufgezeigt.

Das Abtriebs-Moment M_AB für Voll- und Leergasschaltungen (Fig. 1 und Fig. 2) bei Konstanthaltung des dynamischen Moments M_DYN verläuft folgendermaßen:

In der Phase AG (Fig. 1), in welcher der alte Gang noch eingelegt ist, verläuft das Abtriebsmoment konstant gemäß der Formel M_AB = M_MOT x I_AG. In der Lastübernahmephase LÜ1 erfolgt eine lineare Reduzierung des Abtriebsmoments auf einen Wert M_AB = M_MOT x I_NG. In der Gradienteinstellphase GE erfolgt wiederum eine lineare Erhöhung des Abtriebsmoments um den Wert M_DYN x I_NG auf den Wert M_AB = (M_MOT + M_DYN) x I_NG. In der anschließenden Gradientabbauphase GA erfolgt eine lineare Reduzierung um den Wert M_DYN x I_NG auf den Wert M_MOT x I_NG, welcher auch in den sich anschließenden Phasen LÜ2/S und NG konstant gehalten wird. Durch einen erfindungsgemäßen Motoreingriff erfolgt eine Reduzierung des Abtriebsmoments in den Phasen GE, GL sowie GA um den Wert M_DYN x I_NG auf den Wert des Abtriebsmomentes M_MOT x I_NG.

Der untere Verlauf (Fig. 1) des Abtriebsmomentes M_AB für eine Schubrückschaltung bei Leergas ohne Motoreingriff ermöglicht lediglich einen Verlauf mit starker Schubmomentüberhöhung; die gestrichelt dargestellte Linie in den Phasen GE, GL und GA ist lediglich als Bezugslinie zu verstehen.

Für eine Zugrückschaltung bei Vollgas bzw. Schubhochschaltung mit Leergas (Fig. 2) verbleibt das Abtriebsmoment M_AB bis zum Anfang der Gradienteinstellphase GE konstant. In der Gradienteinstellphase GE wird ohne Motoreingriff der Verlauf des Abtriebsmoments M_AB reduziert, in der Gleitphase GL konstant gehalten sowie in der Gradientabbauphase GA wieder auf den Ursprungswert linear angehoben, da bei einer Zugrückschaltung bei Vollgasstellung ein Motoreingriff nicht möglich ist. In der Lastübernahme-/Schließphase LÜ2 S erfolgt eine Erhöhung des Abtriebsmoment auf den Wert M_MOT x I_NG.

Bei einer Schubhochschaltung gemäß Darstellung in Fig. 2 verläuft das Abtriebsmoment zunächst während der Phasen AG und LÜ1 konstant, in der Phase GE steigt es linear auf den Wert 0 und verbleibt auf diesem während der Phase GL und GA und fällt anschließend in der Lastübernahmephase LÜ2 S linear auf einen Wert M_AB = M_MOT x I_NG zurück, den es auch während der Phase NG des neuen Gangs beibehält.

Die Differenzdrehzahl DELTA_N (Fig. 3) zwischen Beginn der Drehzahländerung (Phase GE) und Ende der Drehzahländerung (Phase GA) verläuft für alle in der Erfindung dargestellten Schaltungsarten jeweils gleich und ist daher nur in der Fig. 3 beispielhaft dargestellt. Die Differenzdrehzahl DELTA_N verläuft für die Phasen AG und LÜ1 zunächst konstant und fällt anschließend während der Phasen GE, GL und GA linear auf den Wert 0 ab, welcher auch während der anschließenden Phasen LÜ2, bzw. S und NG beibehalten wird.

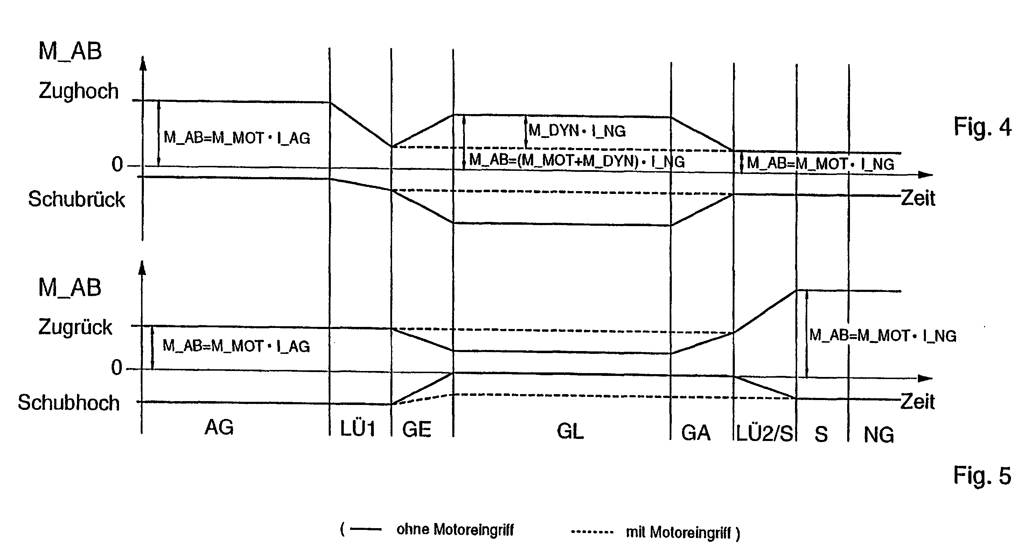

Die Sollverläufe des Abtriebsmoments M_AB für Teilgasschaltungen mit Kompensation des dynamischen Moments M_DYN (Fig. 4 und Fig. 5) verlaufen wie folgt:

Für die Zughoch- bzw. Schubrückschaltung gemäß Fig. 4 entsprechen die beiden Verläufe im wesentlichen den Darstellungen in Fig. 1, jedoch mit dem einen wesentlichen Unterschied, daß in den Phasen GE, GL und GA ein Motoreingriff während der Schubrückschaltung nun möglich ist und dadurch nach der Lastübernahmephase LÜ1 eine Momentenreduzierung auf den Wert M_MOT x I_NG erfolgt und dieser Wert auch bis zum Erreichen der Phase NG des neuen Ganges und während der Phase NG gehalten wird.

Auch während der Zugrück- bzw. Schubhochschaltungen bei Teilgasstellung (Fig. 5) ist nun ein Motoreingriff möglich, so daß ein Einbruch des Abtriebsmomentes in den Phasen GE, GL und GA durch eine Erhöhung des Abtriebsmomentes M_AB vermieden bzw. ein Halten des Abtriebsmomentes M_AB auf dem Wert der Phasen AG und LÜ1 erreicht wird. Für die Schubhochschaltung bei einer Teilgasstellung mit Kompensation des dynamischen Moments M_DYN (Fig. 5) ist analog eine Vermeidung des starken Momenteneinbruchs durch einen Motoreingriff möglich, so daß das Abtriebsmoment in der Gradienteinstellphase GE nur eine geringe Reduzierung auf den Wert M_MOT x I_NG erfährt.

Der Verlauf des Abtriebsmoments M_AB für die Zughoch- bzw. Schubrückschaltung bei Teilgasstellung mit der Bedingung, daß das Abtriebsmoment während der Gleitphase M_AB (GL) gleich ist dem Abtriebsmoment des neuen Gangs M_AB (NG), erfolgt im wesentlichen ähnlich dem Verlauf für Zughoch- bzw. Schubrückschaltung bei Teilgasstellung mit Kompensation des dynamischen Moments gemäß Darstellung in Fig. 4.

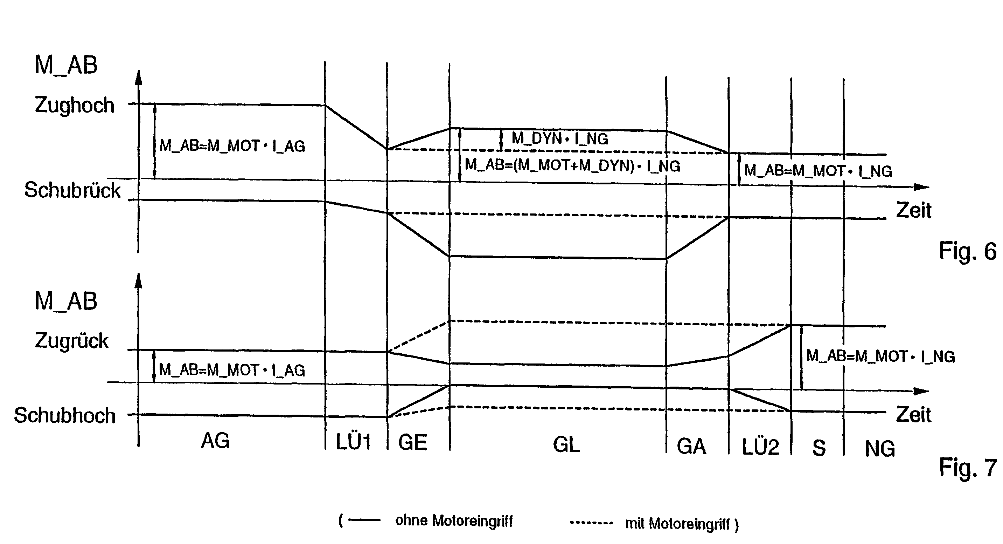

Der Sollverlauf des Abtriebsmoments M_AB für Zugrück- bzw. Schubhochschaltung für Teilgasstellung mit der Bedingung, daß das Abtriebsmoment in der Gleitphase M_AB (NG) gleich ist dem Abtriebsmoment in der Phase des neuen Ganges ist in Figur 7 dargestellt. Dabei ist zu erkennen, daß der Verlauf in den Phasen AG und LÜ1 konstant bleibt und in der Phase GE durch einen Motoreingriff linear ansteigt auf einen Wert M_MOT x I_NG und diesen beibehält während der Gleitphase GL sowie der Gradientabbauphase GA, der Lastübernahmephase LÜ und der Schließphase S bis zum Erreichen des neuen Ganges NG.

Der Verlauf des Abtriebsmoments M_AB für die Schubhochschaltung bei Teilgas mit der zuvor genannten Bedingungen M_AB (GL) = M_AB (NG) gleicht im wesentlichen dem Verlauf für eine Schubhochschaltung gemäß Darstellung in Fig. 5.

Zusammenfassend kann man somit feststellen, daß es erfindungsgemäß die folgenden möglichen Strategien für einen Motoreingriff gibt, wobei das Abtriebsmoment M_AB in der Gleitphase GL wie folgt beeinflußt werden kann:
a) es erfolgt eine Kompensation der dynamischen Überhöhung bzw. Verringerung des Abtriebsmoments, wobei
   M_Soll MAX ME = M_MOT - M_DYN,
b) das Abtriebsmoment M_AB in der Gleitphase GL ist gleich dem Abtriebsmoment M_AB am Schaltungsende NG, wobei für die Zughoch-, Schubrückschaltung gilt:
   M_MOT ME = M_MOT - M_DYN und für die Zugrück-, Schubhochschaltung gilt:
   M_SOLL MAX ME = M_MOT x (I_NG/I_AG) - M_DYN,
c) es findet eine lineare Veränderung des Abtriebsmoment M_AB über der Zeit auf das Abtriebsmoment am Schaltungsende M_MOT x I_NG statt (Mittelweg zwischen a) und b)).

In allen Fällen ist das gewünschte Motor-Sollmoment mit dem maximal einstellbaren Motormoment zu vergleichen, und zwar bei Hochschaltungen mit M_MOT MIN ME (Schubkurve des Motors) und bei Rückschaltungen mit M_MOT MAX ME (Vollastkurve), Sollwerte M_SOLL MAX ME, die jeweils außerhalb des Einstellbereichs liegen, sind auf die Maximalwerte zu begrenzen.

## Patentansprüche

1. Verfahren zum Steuern eines von einer Kraftmaschine angetriebenen Automatgetriebes, bei dem eine Schaltung von einem ersten in ein zweites Übersetzungsverhältnis als eine Zug-Hochschaltung bzw. eine Schubrückschaltung oder als eine Zugrückschaltung bzw. eine Schubhochschaltung erfolgt, indem eine erste Kupplung öffnet und eine zweite Kupplung schließt und ein elektronisches Getriebe-Steuergerät über elektromagnetische Ventile den Druckverlauf der ersten und der zweiten Kupplung während des Schaltvorgangs steuert und die Schaltung aus einer Schnellfüll- (SF), einer Füllausgleichs- (FA), einer Lastübernahme- (LÜ), einer Gradient-Einstell- (GE), einer Gleit- (GL), einer Gradient-Abbau-(GA) und einer Schließphase (S) besteht und daß innerhalb der Lastübernahme- (LÜ), der Gradient-Einstell- (GE), der Gleit- (GL), der Gradient-Abbau- (GA) und der Schließphasen (S) ein Motoreingriff stattfindet, wobei ein Motormoment (M_MOT) und/oder eine dieses bestimmende Kenngröße von dem Getriebe-Steuergerät an ein Motor-Steuergerät der Kraftmaschine übertragen wird, **dadurch gekennzeichnet, daß** die Vorgabe des Motoreingriffs an den Motor und die Druckvorgaben an das Getriebe miteinander synchronisiert werden, wenn sie unterschiedliches Zeitverhalten besitzen.

2. Verfahren nach Anspruch 1 **dadurch gekennzeichnet, daß** die Vorgabe des Motoreingriffs an den Motor über eine Zeitstufe in den Phasen (GE) und (GL) verzögert wird, wenn das Reaktionsverhalten des Motors schneller ist als das des Getriebes auf Druckvorgaben.

3. Verfahren nach Anspruch 1, **dadurch gekennzeichnet, daß** die Druckvorgaben an das Getriebe über eine Zeitstufe in den Phasen (GE) und (GL) verzögert werden, wenn das Reaktionsverhalten des Motors langsamer ist als das des Motors auf die Vorgabe des Motoreingriffs.

4. Verfahren nach Anspruch 1, **dadurch gekennzeichnet, daß** der Motoreingriff durch Vorgabe eines Motor-Sollmoments (M_SOLL) durch das Getriebe-Steuergerät erfolgt.

5. Verfahren nach Anspruch 1, **dadurch gekennzeichnet, daß** der Motoreingriff durch Vorgabe eines vorzeichenbehafteten Zusatzmoments durch das Getriebe-Steuergerät erfolgt.

6. Verfahren nach Anspruch 1, **dadurch gekennzeichnet, daß** der Motoreingriff durch Vorgabe einer Kenngröße durch das Getriebesteuergerät erfolgt, welche das Verhältnis vom Motor-Sollmoment mit Motoreingriff (M_SOLL ME) zu einer Bezugsbasis angibt.

7. Verfahren nach einem der vorgenannten Ansprüche, **dadurch gekennzeichnet, daß** das vorzeichenrichtige statische Moment (M_STAT) in Abhängigkeit von einem Motor-Sollmoment mit Motoreingriff (M_SOLL ME) berechnet wird.

8. Verfahren nach einem der vorgenannten Ansprüche, **dadurch gekennzeichnet, daß** bei Rückschaltungen ein vorzeichenbehaftetes Motor-Sollmoment mit Motoreingriff (M-SOLL MAX ME) berechnet wird in Abhängigkeit von einem maximalen vorzeichenbehafteten dynamischen Moment (M_DYN), dem Motormoment ohne Motoreingriff (M_MOT) und einem maximal möglichen Motormoment mit Motoreingriff (M_MOT MAX ME).

9. Verfahren nach einem der vorgenannten Ansprüche, **dadurch gekennzeichnet, daß** bei Hochschaltungen ein vorzeichenbehaftetes Motor-Sollmoment mit Motoreingriff (M_SOLL MAX ME) berechnet wird in Abhängigkeit von einem maximalen vorzeichenbehafteten dynamischen Moment (M_DYN), dem Motormoment ohne Motoreingriff (M_MOT) und einem minimal möglichen Motormoment mit Motoreingriff (M_MOT MIN ME).

10. Verfahren nach einem der Ansprüche 8 und 9, **dadurch gekennzeichnet, daß** das maximale Motor-Sollmoment mit Motoreingriff (M_SOLL MAX ME) als Summe von (M_MOT) minus (M_DYN) berechnet wird.

11. Verfahren nach einem der Ansprüche 8 und 9, **dadurch gekennzeichnet, daß** das maximale Motor-Sollmoment mit Motoreingriff (M_SOLL MAX ME) als Summe von (M_MOT) mal der Übersetzung Neuer Gang (I_NG) durch die Übersetzung Alter Gang (I_AG) minus (M_DYN) berechnet wird.

12. Verfahren nach einem der Ansprüche 10 und 11, **dadurch gekennzeichnet, daß** das maximale Motor-Sollmoment mit Motoreingriff (M_SOLL MAX ME) vom Wert nach Anspruch 8 auf den Wert von Anspruch 9 in den Phasen (GE, GL, GA, LÜ, S) geändert wird.

13. Verfahren nach einem der Ansprüche 6 und 7, **dadurch gekennzeichnet, daß** in der Phase (GE) ein Übergang des Motor-Sollmoments mit Motoreingriff (M_SOLL ME) stattfindet vom Wert des Motormoments ohne Motoreingriff (M_MOT) auf den Wert des maximalen Motor-Sollmoments mit Motoreingriff (M_SOLL MAX ME)bei Rückschaltungen.

14. Verfahren nach einem der Ansprüche 7 und 9, **dadurch gekennzeichnet, daß** in der Phase (GE) ein Übergang des Motor-Sollmoments mit Motoreingriff (M_SOLL ME) stattfindet vom Wert des Motormoments ohne Motoreingriff (M_MOT) auf den Wert des maximalen Motor-Sollmoments mit Motoreingriff (M_SOLL MAX ME) bei Hochschaltungen.

15. Verfahren nach einem der vorgenannten Ansprüche, **dadurch gekennzeichnet, daß** bei Zugrückund Schubhochschaltungen in den Phasen (GA, LÜ2 und S) ein Übergang des Motor-Sollmoments mit Motoreingriff (M_SOLL ME) stattfindet vom Wert des maximalen Motor-Sollmoments mit Motoreingriff (M_SOLL MAX ME) auf den Wert des Motormoments ohne Motoreingriff (M_MOT).

16. Verfahren nach einem der vorgenannten Ansprüche, **dadurch gekennzeichnet, daß** bei Zughochund Schubrückschaltungen in den Phasen (GA), (LÜ2) und (S) ein Übergang des Motor-Sollmoments mit Motoreingriff (M_SOLL ME) stattfindet vom Wert des maximalen Motor-Sollmoments mit Motoreingriff (M_SOLL MAX ME) auf den Wert des Motormoments ohne Motoreingriff (M_MOT).

17. Verfahren nach einem der vorgenannten Ansprüche, **dadurch gekennzeichnet, daß** der Kupplungsdruck (P_K) an der schließenden Kupplung berechnet wird aus dem statischen Motormoment mit Motoreingriff (M_STAT ME), dem dynamischen Motormoment (M_DYN), einem Faktor (F1), einer Wandlerverstärkung (WV) und dem Absolutdruck (P_ABS).

18. Verfahren nach einem der vorgenannten Ansprüche, **dadurch gekennzeichnet, daß** der Kupplungsdruck (P_K) zu Beginn des Motoreingriffs, nämlich zu Beginn der Phase (GE), berechnet wird als die Summe aus dem Absolutdruck (P_ABS) und dem statischen Motordruck (P_M STAT), wobei dieser sich berechnet als Produkt aus dem Faktor (F1) mal dem statischen Motormoment (M_STAT) mal der Wandlerverstärkung (WV).

19. Verfahren nach einem der vorgenannten Ansprüche, **dadurch gekennzeichnet, daß** der Kupplungsdruck (P_K) während der Gleitphase (GL) berechnet wird als die Summe aus dem Absolutdruck (P_ABS) und dem Druck (P_M STAT ME) des statischen Motormoments mit Motoreingriff und dem Druck (P_M DYN) des dynamischen Motormoments, wobei (P_M DYN) berechnet wird als Produkt aus dem Faktor (F1) mal der Wandlerverstärkung (WV) mal dem dynamischen Motormoment (M_DYN).

20. Verfahren nach einem der vorgenannten Ansprüche, **dadurch gekennzeichnet, daß** das dynamische Motormoment (M_DYN) während der Gradient-Einstellphase (GE) von Null auf 100 % gesteigert wird, in der Gleitphase (GL) bei 100 % verbleibt und in der Gradient-Abbauphase (GA) von 100 % auf Null reduziert wird.

21. Verfahren nach einem der vorgenannten Ansprüche, **dadurch gekennzeichnet, daß** das maximal (M_MOT MAX ME) und minimal (M_MOT MIN ME) mögliche Motormoment mit Motoreingriff aktuell vom Motor-Steuergerät zurückgemeldet wird an das Getriebe-Steuergerät.

22. Verfahren nach einem der vorgenannten Ansprüche, **dadurch gekennzeichnet, daß** das maximal (M_MOT MAX ME) und das minimal (M_MOT MIN ME) mögliche Motormoment mit Motoreingriff in Kennfeldern im Getriebe-Steuergerät in Abhängigkeit von Betriebsparametern wie z. B. Motordrehzahl, Laststellung oder Einspritzmenge oder Motormoment oder Luftmasse abgelegt sind.

23. Verfahren nach einem der vorgenannten Ansprüche, **dadurch gekennzeichnet, daß** der Motoreingriff in Abhängigkeit von Betriebsparametern wie z. B. Motordrehzahl, Laststellung oder Einspritzmenge oder Motormoment oder Luftmasse aktiviert wird.

24. Verfahren nach einem der vorgenannten Ansprüche, **dadurch gekennzeichnet, daß** sich bei Vorhandensein anderer momentbeeinflussender Aggregate (z. B. Elektromotor, Lichtmaschine, Lüfter, Klimakompressor, Zusatzbremse) der Motoreingriff auf diese Aggregate verteilt.

## Claims

1. Method for controlling an automatic transmission driven by a prime mover, in which a shift from a first transmission ratio into a second transmission ratio takes place as a load upshift or coast downshift or as a load downshift or coast upshift while a first clutch opens and a second clutch closes and an electronic transmission control unit controls the pressure progression of the first and the second clutch via electromagnetic valves during the shift, the shift comprising a quick-fill phase (SF), a fill compensation phase (FA), a load transfer phase (LÜ), a gradient setting phase (GE), a slip phase (GL), a gradient reduction phase (GA) and a closing phase (S) and, with engine intervention taking place during the load transfer phase (LÜ), the gradient setting phase (GE), the slip phase (GL), the gradient reduction phase (GA) and the closing phase (S), in which an engine torque (M_MOT) and/or a parameter which determines engine torque is transmitted from the transmission control unit to an engine control unit of the prime mover, **characterised in that** the engine intervention stipulated to the engine and the pressures stipulated to the transmission are synchronised if they have different time-related characteristics.

2. Method as per claim 1, **characterised in that** the engine intervention stipulated to the engine is delayed via a time stage in the phases (GE) and (GL) if the engine is quicker than the transmission in reacting to the pressure stipulations.

3. Method as per claim 1, **characterised in that** the pressures stipulated to the transmission are delayed via a time stage in phases (GE) and (GL) if the engine is slower than the transmission in reacting to the engine intervention stipulation.

4. Method as per claim 1, **characterised in that** engine intervention occurs when the transmission control unit stipulates a desired engine torque (M_SOLL).

5. Method as per claim 1, **characterised in that** engine intervention occurs when the transmission control unit stipulates a signed additional torque.

6. Method as per claim 1, **characterised in that** engine intervention occurs when the transmission control unit stipulates a parameter which indicates the relationship between the desired engine torque with engine intervention (M_SOLL ME) and a reference basis.

7. Method as per one of the aforementioned claims, **characterised in that** the correctly signed static torque (M_STAT) is calculated as a function of a desired engine torque with engine intervention (M_SOLL ME).

8. Method as per one of the aforementioned claims, **characterised in that**, during downshifts, a signed desired engine torque with engine intervention (M_SOLL MAX ME) is calculated as a function of a maximum signed dynamic torque (M_DYN), the engine torque without engine intervention (M_MOT) and a maximum possible engine torque with engine intervention (M_MOT MAX ME).

9. Method as per one of the aforementioned claims, **characterised in that**, during upshifts, a signed desired engine torque with engine intervention (M_SOLL MAX ME) is calculated as a function of a maximum signed dynamic torque (M_DYN), the engine torque without intervention (M_MOT) and a minimum possible engine torque with engine intervention (M_MOT MIN ME).

10. Method as per one of the claims 8 and 9, **characterised in that** the maximum desired engine torque with engine intervention (M_SOLL MAX ME) is calculated as the sum of (M_MOT) minus (M_DYN).

11. Method as per one of the claims 8 and 9, **characterised in that** the maximum desired engine torque with engine intervention (M_SOLL MAX ME) is calculated as the sum of (M_MOT) multiplied by the transmission ratio of the new gear (I_NG) divided by the transmission ratio of the old gear (I_AG) minus (M_DYN).

12. Method as per one of the claims 10 and 11, **characterised in that** the maximum desired engine toque with engine intervention (M_SOLL MAX ME) is changed from the value as per claim 8 to the value of claim 9 in the phases (GE, GL, GA, LÜ, S).

13. Method as per one of the claims 6 and 7, **characterised in that**, in the phase (GE), the desired engine torque with engine intervention (M_SOLL ME) changes from the value of the engine torque without engine intervention (M_MOT) to the value of the maximum desired engine torque with engine intervention (M_SOLL MAX ME) in the case of downshifts.

14. Method as per one of the claims 7 and 9, **characterised in that**, in the phase (GE), the desired engine torque with engine intervention (M_SOLL ME) changes from the value of the engine torque without engine intervention (M_MOT) to the value of the maximum desired engine torque with engine intervention (M_SOLL MAX ME) in the case of upshifts.

15. Method as per one of the aforementioned claims, **characterised in that**, in the case of load downshifts and coast upshifts in the phases (GA, LÜ2 and S), the desired engine torque with engine intervention (M_SOLL ME) changes from the value of the maximum desired engine torque with engine intervention (M_SOLL MAX ME) to the value of the engine torque without engine intervention (M_MOT).

16. Method as per one of the aforementioned claims, **characterised in that**, in the case of load upshifts and coast downshifts in the phases (GA), (LÜ2) and (S), the desired engine torque with engine intervention (M_SOLL ME) changes from the value of the maximum desired engine torque with engine intervention (M_SOLL MAX ME) to the value of the engine torque without engine intervention (M_MOT).

17. Method as per one of the aforementioned claims, **characterised in that** the clutch pressure (P_K) at the closing clutch is calculated based on the static engine torque with engine intervention (M_STAT ME), the dynamic engine torque (M_DYN), a factor (F1), a converter multiplication (WV) and the absolute pressure (P_ABS).

18. Method as per one of the aforementioned claims, **characterised in that** the clutch pressure (P_K) at the beginning of engine intervention, namely at the beginning of phase (GE), is calculated as the sum of the absolute pressure (P_ABS) and the static engine pressure (P_M STAT), this being the product of the factor (F1) multiplied by the static engine torque (M_STAT) multiplied by the converter multiplication (WV).

19. Method as per one of the aforementioned claims, **characterised in that** the clutch pressure (P_K) is calculated during the slip phase (GL) as the sum of the absolute pressure (P_ABS) and the pressure of the static engine torque with engine intervention (P_M STAT ME) and the pressure of the dynamic engine torque (P_M DYN), (P_M DYN) being calculated as the product of the factor (F1) multiplied by the converter multiplication (WV) multiplied by the dynamic engine torque (M_DYN).

20. Method as per one of the aforementioned claims, **characterised in that** the dynamic engine torque (M_DYN) is increased from zero to 100 % during the gradient setting phase (GE), remains at 100 % in the slip phase (GL) and is reduced from 100 % to zero in the gradient reduction phase (GA).

21. Method as per one of the aforementioned claims, **characterised in that** the engine control unit confirms the maximum possible engine torque with engine intervention (M_MOT MAX ME) and the minimum possible engine torque with engine intervention (M_MOT MIN ME) to the transmission control unit.

22. Method as per one of the aforementioned claims, **characterised in that** the maximum possible engine torque with engine intervention (M_MOT MAX ME) and the minimum possible engine torque with engine intervention (M_MOT MIN ME) are stored in maps in the transmission control unit, as a function of operating parameters such as engine rotational speed, load position or injection quantity or engine torque or air mass.

23. Method as per one of the aforementioned claims, **characterised in that** the engine intervention is activated as a function of operating parameters such as engine rotational speed, load position or injection quantity or engine torque or air mass.

24. Method as per one of the aforementioned claims, **characterised in that,** if other torque-influencing components are present (e.g. electric motor, alternator, fan, air-conditioning compressor, auxiliary brake), the engine intervention is divided between these components.

## Revendications

1. Méthode de pilotage d'une boîte de vitesses automatique entraînée par une machine motrice, où le passage d'un premier rapport de démultiplication à un deuxième rapport de démultiplication s'effectue en tant que passage montant en tirage ou passage rétro en tirage ou en tant que passage rétro en tirage ou passage rétro en poussée, un premier embrayage s'ouvrant et un deuxième embrayage se fermant et un boîtier de commande électronique de la boîte de vitesses pilotant, par l'intermédiaire de valves électromagnétiques, la loi de pression du premier et du deuxième embrayages pendant le processus de passage de vitesse, et où le passage de vitesses se compose d'une phase de remplissage rapide (SF), d'une phase de compensation de remplissage (FA), d'une phase de transfert de la charge (LÜ), d'une phase de régulation du gradient (GE), d'une phase de patinage (GL), d'une phase de réduction du gradient (GA) et d'une phase de fermeture (S), et sachant que au cours de la phase de transfert de la charge (LÜ), de la phase de régulation du gradient (GE), de la phase de patinage (GL), de la phase de réduction du gradient (GA) et de la phase de fermeture (S) a lieu une intervention moteur par estompage de couple, sachant qu'un couple moteur (M_MOT) et/ou un paramètre déterminant ce couple moteur est transmis à partir du calculateur de la boîte de vitesses au calculateur du moteur de la machine motrice, **caractérisée en ce que** la valeur de consigne de l'intervention moteur par estompage de couple transmise au moteur et les valeurs de consigne de la pression transmises à la boîte de vitesses sont synchronisées lorsque leur comportement dans le temps diffère.

2. Méthode selon la revendication 1, **caractérisée en ce que** la valeur de consigne de l'intervention moteur par estompage de couple transmise au moteur est retardée au moyen d'un étage de temporisation dans les phases (GE) et (GL), si la réponse du moteur est plus rapide que la réponse de la boîte de vitesses par rapport aux valeurs de consigne de pression.

3. Méthode selon la revendication 1, **caractérisée en ce que** les valeurs de consigne de pression transmises à la boîte de vitesses sont retardées au moyen d'un étage de temporisation dans les phases (GE) et (GL), si la réponse du moteur est plus lente que la réponse de la boîte de vitesses à la valeur de consigne de l'intervention moteur par estompage de couple.

4. Méthode selon la revendication 1, **caractérisée en ce que** l'intervention moteur par estompage de couple s'effectue - par une valeur de consigne du couple nominal du moteur (M_SOLL) - au moyen du boîtier de commande de la boîte de vitesses.

5. Méthode selon la revendication 1, **caractérisée en ce que** l'intervention du moteur par estompage de couple s'effectue - par un couple additionnel signé - au moyen du boîtier de commande de la boîte de vitesses.

6. Méthode selon la revendication 1, **caractérisée en ce que** l'estompage de couple s'effectue par un paramètre prédéfini au moyen du boîtier de commande de la boîte de vitesses, lequel indique le rapport entre le couple moteur nominal avec estompage de couple (M_SOLL ME) et une base de référence.

7. Méthode selon une des revendications précédentes, **caractérisée en ce que** le couple statique signé correctement (M_STAT) est calculé en fonction d'un couple moteur nominal avec estompage de couple (M_SOLL ME).

8. Méthode selon une des revendications précédentes, **caractérisée en ce que** lors de rétrogradages un couple moteur nominal avec estompage de couple signé (M_SOLL MAX ME) est calculé en fonction d'un couple maxi. dynamique et signé (M_DYN), du couple moteur sans estompage de couple (M_MOT) et d'un couple moteur maxi. possible avec estompage de couple (M_MOT MAX ME).

9. Méthode selon une des revendications précédentes, **caractérisée en ce que** lors de passages montants un couple moteur nominal avec estompage de couple signé (M_SOLL MAX ME) est calculé en fonction d'un couple maxi. dynamique et signé (M_DYN), du couple moteur sans estompage de couple (M_MOT) et d'un couple moteur mini. possible avec estompage de couple (M_MOT MAX ME).

10. Méthode selon une des revendications 8 et 9, **caractérisée en ce que** le couple moteur nominal maxi. avec estompage de couple (M_SOLL MAXI ME) est calculé en tant que somme de (M_MOT) moins (M_DYN).

11. Méthode selon une des revendications 8 et 9, **caractérisée en ce que** le couple moteur nominal maxi. avec estompage de couple (M_SOLL MAXI ME) est calculé en tant que somme de (M_MOT) multiplié par le rapport de démultiplication de la nouvelle vitesse (I_NG) divisé par le rapport de démultiplication de la vitesse précédemment engagée (I_AG) moins (M-DYN).

12. Méthode selon une des revendications 10 et 11, **caractérisée en ce que** le couple moteur nominal maxi. avec estompage de couple (M_SOLL MAXI ME) est porté - dans les phases (GE, GL, GA, LÜ, S) - de la valeur selon la revendication 8 à la valeur selon la revendication 9.

13. Méthode selon une des revendications 6 et 7, **caractérisée en ce que** dans la phase (GE) s'effectue - lors de rétrogradages - un passage à partir du couple moteur nominal avec estampage de couple (M_SOLL ME), et cela à partir de la voleur du couple moteur sans estampage de couple (M_MOT), à la valeur du couple moteur nominal maxi. avec estampage de couple (M_SOLL MAXI ME).

14. Méthode selon une des revendications 7 et 9, **caractérisée en ce que** dans la phase (GE) s'effectue - lors de passages montants - un passage à partir du couple moteur nominal avec estompage de couple (M_SOLL ME), et cela à partir de la valeur du couple moteur sans estompage de couple (M_MOT), à la valeur du couple moteur nominal maxi. avec estompage de couple (M_SOLL MAXI ME).

15. Méthode selon une des revendications précédentes, **caractérisée en ce que** lors de passages rétro en tirage et de passages montants en poussée dans les phases (GA, LÜ2 et S) s'effectue un passage à partir du couple moteur nominal avec estompage de couple (M_SOLL ME), et cela à partir de la valeur du couple moteur maxi. sans estompage de couple (M_SOLL MAX ME), à la valeur du couple moteur sans estompage de couple (M_MOT).

16. Méthode selon une des revendications précédentes, **caractérisée en ce que** lors de passages rétro en tirage et passages rétro en poussée dans les phases (GA), (LÜ2) et (S) s'effectue un passage à partir du couple moteur nominal avec estompage de couple (M_SOLL ME), et cela à partir de la valeur du couple moteur maxi. sans estompage de couple (M_SOLL MAX ME), à la valeur du couple moteur sans estompage de couple (M_MOT).

17. Méthode selon une des revendications précédentes, **caractérisée en ce que** la pression d'embrayage (P_K) au niveau de l'embrayage se fermant est calculée en tenant compte du couple moteur statique avec estompage de couple (M_STAT ME), du couple moteur dynamique (M_DYN), d'un facteur (F1), d'une amplification du convertisseur (WV) et de la pression absolue (P_ABS).

18. Méthode selon une des revendications précédentes, **caractérisée en ce que** la pression d'embrayage (P_K) au début de l'estompage de couple, c'est-à-dire au début de la phase (GE), est calculée en tant que somme de la pression absolue (P_ABS) et de la pression moteur statique (P_M STAT), sachant que celle-ci est calculée en tant que produit du facteur (F1) et du couple moteur statique (M_STAT) multiplié par l'amplification du convertisseur (WV).

19. Méthode selon une des revendications précédentes, **caractérisée en ce que** la pression d'embrayage (P_K) pendant la phase de patinage (GL) est calculée en tant que somme de la pression absolue (P_ABS) et la pression (P_M STAT ME) du couple moteur statique avec estompage de couple et la pression (P_M DYN) du couple moteur dynamique, sachant que (P_M DYN) est calculée en tant que produit du facteur (F1) et l'amplification du convertisseur (WV) multiplié par le couple moteur dynamique (M_DYN).

20. Méthode selon une des revendications précédentes, **caractérisée en ce que** le couple moteur dynamique (M_DYN) est incrémenté pendant la phase de régulation du gradient (GE) de zéro à 100%, **en ce qu'**il reste pendant la phase de patinage (GL) sur 100%, et **en ce qu'**il est réduit de 100% à zéro dans la phase de réduction du gradient (GA).

21. Méthode selon une des revendications précédentes, **caractérisée en ce que** le couple moteur maxi. possible (M_MOT MAX ME) et le couple moteur mini. possible (M_MOT MIN ME) avec estompage de couple actuels sont transmis du calculateur moteur au calculateur de la boîte de vitesses.

22. Méthode selon une des revendications précédentes, **caractérisée en ce que** le couple moteur maxi. possible (M_MOT MAX ME) et le couple moteur mini. possible (M_MOT MIN ME) avec estompage de couple sont enregistrés dans des champs caractéristiques dans le calculateur de la boîte de vitesses, et cela en fonction de paramètres de fonctionnement comme par exemple le régime moteur, la position de charge ou la quantité injectée ou le couple moteur ou la masse d'air.

23. Méthode selon une des revendications précédentes, **caractérisée en ce que** l'estompage de couple est activé en fonction de paramètres de fonctionnement comme par exemple le régime moteur, la position de charge ou la quantité injectée ou le couple moteur ou la masse d'air.

24. Méthode selon une des revendications précédentes, **caractérisée en ce que** en cas de présence de groupes ayant une influence sur le couple (par exemple moteur électrique, alternateur, ventilateur, compresseur de climatiseur, frein auxiliaire) l'estompage de couple se répartit sur ces groupes.
